# DEMANDE DE BREVET EUROPEEN

(11) **EP 0 542 608 A1**
(43) Date de publication de la demande: **19.05.1993**
(21) Numéro de dépôt: 92403011.7
(22) Date de dépôt: 06.11.1992
(51) Int. Cl.: H04N 3/18

(54) **Dispositif de commande d'un déviateur de balayage horizontal d'un récepteur de télévision notamment à haute définition**

(30) Priorité: 13.11.1991 FR 9113935
(71) Demandeur: NOKIA CONSUMER ELECTRONICS FRANCE S.A., F-93230 Romainville (FR)
(72) Inventeur: Thevenin, Claude Gabriel Jean, F-92000 Nanterre (FR)
(74) Mandataire: Habasque, Etienne Joel Jean-François

(57) **Abrégé**

Ce dispositif, dans lequel le déviateur comporte des bobines de déviation (2) reliées à la sortie de moyens de commande (3) de leur alimentation et comportant des moyens (4) de correction de cette alimentation pour ajuster la valeur du champ magnétique produit par les bobines (2) en fonction d'une valeur de référence, est caractérisé en ce que les moyens de correction comprennent au moins une bobine de mesure (5) du champ magnétique réel produit par les bobines du déviateur, incorporée dans le déviateur (1) et dont la sortie est reliée à l'entrée de moyens d'intégration (6), la sortie de ces moyens d'intégration (6) étant reliée à des moyens de comparaison (7) de la valeur du champ réel à la valeur de référence, la sortie d'erreur de ces moyens de comparaison (7) étant reliée à l'entrée de moyens d'amplification (9) dont la sortie est reliée à des moyens de correction (10) du courant circulant dans les bobines.

## Description

La présente invention concerne un dispositif de commande d'un déviateur de balayage horizontal d'un récepteur de télévision notamment à haute définition.

Dans les récepteurs de télévision, ce déviateur de balayage horizontal comporte des bobines de déviation disposées par exemple de part et d'autre du tube et qui sont reliées à la sortie de moyens de commande de leur alimentation.

Ces moyens de commande sont activés par des signaux de pilotage synchronisés sur les signaux de synchronisation de ligne du récepteur.

Par ailleurs, il est également prévu des moyens de correction de cette alimentation pour ajuster la valeur du champ magnétique produit par les bobines en fonction d'une valeur de référence.

Dans l'état de la technique, ces moyens comprennent par exemple une résistance connectée en série avec les bobines et des moyens de mesure de la tension aux bornes de cette résistance dont la sortie fournit une réaction pour les moyens d'alimentation afin que ceux-ci ajustent l'alimentation des bobines pour obtenir la valeur de champ souhaitée.

Dans ces récepteurs, la correction se fait donc à partir d'une tension proportionnelle à la valeur du courant circulant dans les bobines.

On conçoit que ceci présente un certain nombre d'inconvénients car le champ magnétique produit par les bobines de déviation n'est pas toujours proportionnel à ce courant.

En effet , on a constaté que lors d'un fonctionnement à haute température, l'efficacité de ces bobines de déviation décroît de sorte que la relation champ produit -courant traversant les bobines, n'est pas constante, ce qui se traduit par une imperfection de la correction apportée à l'alimentation de ces bobines et donc une imperfection au niveau de la visualisation des informations.

Cette imprécision est accentuée par la présence d'une résistance en série avec les bobines.

Le but de l'invention est donc de résoudre ces problèmes en proposant un dispositif de commande d'un tel déviateur qu'il soit simple, fiable et qui comporte des moyens de correction de l'alimentation des bobines du déviateur qui soient les plus précis possible.

A cet effet l'invention a pour objet un dispositif de commande d'un déviateur de balayage horizontal d'un récepteur de télévision notamment à haute définition, dans lequel le déviateur comporte des bobines de déviation reliées à la sortie de moyens de commande de leur alimentation et comportant des moyens de correction de cette alimentation pour ajuster la valeur du champ magnétique produit par les bobines en fonction d'une valeur de référence, caractérisé en ce que les moyens de correction comprennent au moins une bobine de mesure du champ magnétique réel produit par les bobines d'alimentation, incorporée dans le déviateur et dont la sortie est reliée à l'entrée de moyens d'intégration, la sortie de ces moyens d'intégration étant reliée à des moyens de comparaison de la valeur du champ réel à la valeur de référence, la sortie d'erreur de ces moyens de comparaison étant reliée à l'entrée de moyens d'amplification dont la sortie est reliée à des moyens de correction du courant circulant dans les bobines.

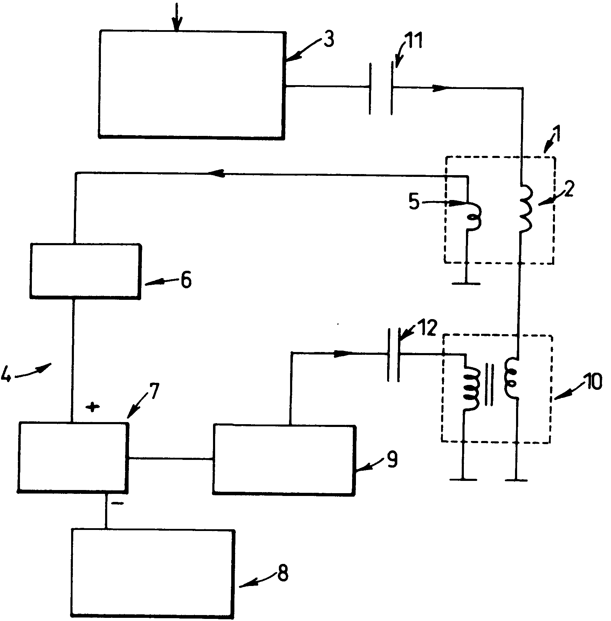

L'invention sera mieux comprise à l'aide de la description qui va suivre donnée uniquement à titre d'exemple et faite en se référant au dessin annexé qui représente le schéma synoptique d'un dispositif de commande selon l'invention.

Ainsi qu'on peut le voir sur cette figure, un dispositif de commande selon l'invention permet de piloter un déviateur de balayage horizontal d'un récepteur de télévision notamment à haute définition.

Sur cette figure, le déviateur est désigné par la référence générale 1 et présente une structure classique, c'est-à-dire qu'il comporte des bobines de déviation, dont l'une, 2, est représentée, reliées à la sortie de moyens de commande 3 de leur alimentation.

Cette partie du dispositif fonctionne de manière classique, c'est-à-dire qu'elle alimente les bobines du déviateur qui sont disposées autour du tube du récepteur de télévision et adaptées pour assurer la déviation des faisceaux d'électrons émis par les canons de ce tube.

Par ailleurs, ce dispositif comporte également des moyens, désignés par la référence générale 4, permettant de corriger cette alimentation pour ajuster la valeur du champ magnétique produit par les bobines en fonction d'une valeur de référence.

Alors que dans l'état de la technique ces moyens de correction sont basés sur l'utilisation d'une résistance en série avec les bobines, dans le dispositif selon l'invention ces moyens de correction comprennent au moins une bobine 5 de mesure du champ magnétique réel produit par les bobines de déviation du déviateur, incorporée dans celui-ci. La sortie de cette bobine est reliée à l'entrée de moyens d'intégration 6 dont la sortie est reliée à des moyens 7 de comparaison de la valeur de ce champ réel à une valeur de référence délivrée par exemple par des moyens de mémorisation 8.

La sortie d'erreur de ces moyens de comparaison est reliée à l'entrée de moyens d'amplification 9 dont la sortie est reliée à des moyens 10 de correction du courant circulant dans les bobines du déviateur 1.

On notera que des condensateurs 11 et 12 sont connectés respectivement entre les moyens d'alimentation et les bobines du déviateur et entre l'amplificateur 9 et les moyens de correction 10, respectivement, pour former avec ceux-ci des circuits résonnants, de manière classique.

Comme on peut le voir sur cette figure, les moyens de correction 10 du courant circulant dans les bobines du déviateur sont constitués par exemple par une source de courant auxiliaire à transformateur unidirectionnel, pilotée par la sortie des moyens d'amplification, permettant de réguler le courant d'alimentation de ces bobines pour ajuster le champ produit.

On conçoit donc que le dispositif selon l'invention prend en compte la valeur du champ magnétique réel produit par les bobines de déviation pour assurer la correction de l'alimentation de celles-ci et que cette correction est appliquée par des organes indépendants des moyens de commande de l'alimentation de ces bobines.

## Revendications

1. Dispositif de commande d'un déviateur (1) de balayage horizontal d'un récepteur de télévision notamment à haute définition, dans lequel le déviateur (1) comporte des bobines de déviation (2) reliées à la sortie de moyens de commande (3) de leur alimentation et comportant des moyens (4) de correction de cette alimentation pour ajuster la valeur du champ magnétique produit par les bobines (2) en fonction d'une valeur de référence, caractérisé en ce que les moyens de correction comprennent au moins une bobine de mesure (5) du champ magnétique réel produit par les bobines du déviateur, incorporée dans le déviateur (1) et dont la sortie est reliée à l'entrée de moyens d'intégration (6), la sortie de ces moyens d'intégration (6) étant reliée à des moyens de comparaison (7) de la valeur du champ réel à la valeur de référence, la sortie d'erreur de ces moyens de comparaison (7) étant reliée à l'entrée de moyens d'amplification (9) dont la sortie est reliée à des moyens de correction (10) du courant circulant dans les bobines.

2. Dispositif de commande selon la revendication 1, caractérisé en ce que les moyens de correction (10) du courant circulant dans les bobines sont connectés en série avec celles-ci.

3. Dispositif de commande selon la revendication 1 ou 2, caractérisé en ce que les moyens de correction comprennent une source de courant auxiliaire pilotée par la sortie des moyens d'amplification (9).

4. Dispositif de commande selon l'une quelconque des revendications précédentes, caractérisé en ce que la valeur de référence est délivrée par des moyens de mémorisation (8) reliés aux moyens de comparaison (7).
